# FASCICULE DE BREVET EUROPEEN

(11) **EP 2 981 742 B1**
(45) Date de publication et mention de la délivrance du brevet: **17.11.2021**
(21) Numéro de dépôt: 14713559.4
(22) Date de dépôt: 12.03.2014
(51) Int. Cl.: F16H 61/02, B60K 6/48, B60W 10/06, B60W 10/08, B60W 10/11, B60W 20/00

(54) **PROCEDE DE CONTROLE DE L'ETAT D'UNE CHAINE CINEMATIQUE D'UN GROUPE MOTOPROPULSEUR DE VEHICULE ELECTRIQUE HYBRIDE OU THERMIQUE**
METHODE ZUR KONTROLLE DES ZUSTANDS EINES ANTRIEBSSTRANGS EINES TRIEBWERKS EINES ELEKTRO-, HYBRID- ODER VERBRENNUNGSMOTORFAHRZEUGS
METHOD FOR CONTROLLING THE STATE OF A DRIVE TRAIN OF A POWER TRAIN OF AN ELECTRIC, HYBRID OR COMBUSTION ENGINE VEHICLE

(30) Priorité: 05.04.2013 FR 1353077
(43) Date de publication de la demande: 10.02.2016
(73) Titulaire: Renault S.A.S., 92100 Boulogne-Billancourt (FR)
(72) Inventeur: PLANCHE, Grégory, F-91400 Orsay (FR); ROUDEAU, Frédéric, F-94400 Vitry-sur-Seine (FR); LEFEVRE, Aurélien, F-92190 Meudon (FR)
(86) Numéro de dépôt international: PCT/FR2014/050561
(87) Numéro de publication internationale: WO 2014/162076

(56) Documents cités:
- AT-A2- 508 066
- DE-A1-102008 042 132
- DE-A1-102011 114 440
- US-A1- 2011 130 901
- None

## Description

La présente invention se rapporte au domaine des stratégies de contrôle des groupes motopropulseurs de véhicules hybrides.

Les stratégies visées, sont celles qui visent à optimiser le point de fonctionnement d'un groupe motopropulseur (GMP) hybride, en pilotant les changements d'état de sa chaîne cinématique.

Plus précisément, cette invention a pour objet un procédé de contrôle de l'état d'une chaîne cinématique de groupe motopropulseur comportant au moins une source d'énergie motrice et un ensemble de coupleurs et de réducteurs dont les engagements respectifs définissent plusieurs états de chaîne cinématique, accessibles par l'engagement d'une seule ou de plusieurs sources d'énergie dans la fourniture de couple, et par son rapport de transmission aux roues.

Elle trouve une application privilégiée sur un GMP de véhicule hybride comportant au moins un moteur thermique et une machine électrique de traction, disposant de plusieurs rapports de transmission sur un ou plusieurs modes de fonctionnement, hybride, thermique ou électrique. Cette invention est également applicable sur un GMP thermique, sans machine électrique de traction.

L'état d'une chaîne cinématique de GMP est défini par une combinaison de(s) coupleur(s) et de réducteur(s), spécifiques d'une architecture de véhicule concernée.

Dans le cas d'une boîte une boîte de vitesse classique, l'état de la chaîne cinématique est défini par l'engagement d'un réducteur, par exemple de première, et par la fermeture d'un embrayage d'entrée. Dans le cas d'un véhicule hybride, entrent en jeu, non seulement l'embrayage d'entrée (s'il y en a un), et des réducteurs de vitesse, mais aussi l'intervention de moteurs électriques propulsant le véhicule, notamment par les roues arrière.

Dans le cas d'un GMP hybride, les différences significatives sont les suivantes :
- le moteur thermique n'est plus la seule source de puissance motrice,
- pour une même puissance aux roues, on a diverses combinaisons possibles entre la puissance délivrée par le moteur thermique et celle délivrée par le(s) machines électriques de traction,
- selon la définition technique envisagée, la puissance de la machine électrique transite ou non par la transmission,
- les limitations statiques et dynamiques du GMP peuvent être dépendantes de l'état de charge de la batterie, et
- le mode électrique ou ZEV pour « Zéro Emission Vehicle » regroupe un ou plusieurs états de chaîne cinématique, au même titre que les rapports discrets.

Par la publication US 6 067 495, on connaît une méthode de classement de rapports disponibles sur une boîte de vitesses automatique, dans une table fixe. Toutefois, la méthode ne permet pas de classer les états de la chaîne cinématique de la boîte en temps réel.

Dans un GMP strictement thermique ou électrique, un rétrogradage est simplement un changement de rapport descendant, de n à n-1, par exemple de cinquième à quatrième, et un passage montant est simplement un changement de rapport de n à n+1, par exemple de quatrième à cinquième. Lorsque le conducteur réalise un rétrogradage, il cherche à obtenir plus de motricité sur son véhicule ou de frein moteur (freinage ou relevé de pied sur la pédale d'accélérateur). Cependant, le simple étagement des rapports de boîte d'un véhicule thermique (rapport 1, 2, 3, 4, 5 et 6 par exemple) n'est pas suffisant pour classer les états de la chaîne cinématique d'un véhicule hybride, en raison des différentes combinaisons possibles de rapports disponibles, et de sources de couple à la roue.

Par ailleurs, pour un même point de fonctionnement (Vitesse, Puissance motrice), les phénomènes acoustiques dépendent de la répartition entre la puissance électrique et la puissance thermique. En effet, si la machine électrique fonctionne seule, le GMP fera moins de bruit que si les deux moteurs (thermique et électrique) fonctionnent ensemble.

Enfin, sur un véhicule hybride, l'agrément de conduite, lié aux performances du GMP, devient dépendant de l'état de charge de la batterie. Si la batterie est chargée, la puissance délivrée par la machine électrique et par le moteur thermique sont utilisables simultanément. Si elle est déchargée, la seule source d'énergie disponible est le moteur thermique, avec une diminution possible des performances. La répartition de la puissance entre les deux sources d'énergie est déterminée par des lois de gestion de l'énergie, imposant une répartition entre la puissance délivrée par le moteur thermique et celle délivrée par le moteur électrique, en fonction de l'état de charge de la batterie. Ces lois interviennent notamment pour satisfaire aux exigences de consommation et de dépollution.

Le document DE-A1-102008042132 divulgue un procédé de contrôle de l'état d'une chaîne cinématique de groupe motopropulseur comportant au moins une source d'énergie motrice et un ensemble de coupleurs et de réducteurs dont les engagements respectifs définissent plusieurs états de chaîne cinématique, par l'engagement d'une seule ou de plusieurs sources d'énergie dans la fourniture de couple et par son rapport de transmission aux roues.

La présente invention a pour but d'élaborer une consigne d'état de la chaîne cinématique d'un véhicule, permettant d'optimiser le compromis souhaité entre le niveau acoustique du véhicule, son agrément de conduite, la réduction de sa consommation, et les exigences de dépollution.

Dans ce but, elle propose que des états de la chaîne cinématique, ciblés à partir de son état courant, soient classés en temps réel, en fonction de la différence entre la force motrice disponible sur l'état courant, et sur chaque état cible, et que le classement des états ciblés détermine en temps réel un niveau minimum de force motrice disponible sur chaque état ciblé pour pouvoir être adopté comme état courant.

De préférence, la force motrice maximale est définie dans chacun de ces états, en fonction des démultiplications, des couples maximaux que peuvent fournir la machine électrique et le moteur thermique, et du régime ou de la vitesse véhicule.

La présente invention sera mieux comprise à la lecture de la description suivante d'un mode de réalisation non limitatif de celle-ci, en se reportant aux dessins annexés, sur lesquels.
- la figure 1 est un logigramme de la stratégie de classement des états chaines cinématiques « montant » et « rétro » proposée, et
- la figure 2 représente la force disponible à la roue, pour chaque état de la chaîne cinématique, en fonction de la vitesse.

Comme indiqué plus haut, le classement des états cinématiques établi sur les rapports de boites de vitesses d'un véhicule thermique est inopérant sur un GMP hybride, en raison des différentes combinaisons possibles de sources de couple à la roue, et de rapports de transmission. La stratégie proposée se base sur l'ensemble des forces de traction disponibles sur chacun des états de la chaîne cinématique disponibles sur un GMP et l'architecture véhicule correspondante. Par analogie avec les transmissions conventionnelles, on qualifie de « montant » un état cible de GMP Hybride lorsque cet état fournit à la roue une force de traction moins importante que celle du rapport courant. De façon analogue, on qualifie de « rétro », ou descendant, un état cinématique cible qui fournit à la roue une force de traction plus importante que celle du rapport courant.

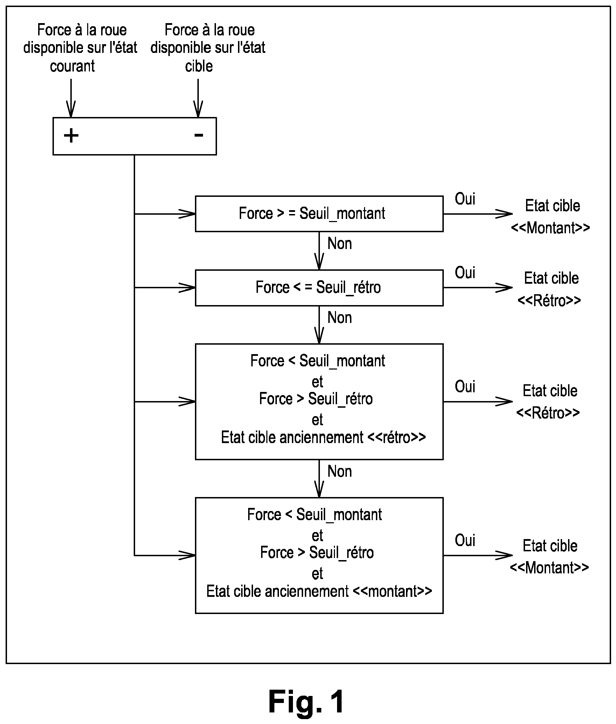

Le logigramme de la figure 1 présente la stratégie. La première étape est le calcul de la différence entre la force de traction disponible à la roue sur l'état courant et la force de traction disponible à la roue sur un état chaîne de cinématique, choisi comme cible. Trois cas se présentent :
- si cette différence est supérieure ou égale à un premier seuil calibré, dit « seuil-montant », l'état ciblé est considéré comme un « état montant » par rapport à l'état courant.
- si elle est inférieure ou égale à un deuxième seuil calibré, dit « seuil-rétro », l'état ciblé est considéré comme un état descendant, ou « rétro », par rapport à l'état courant.
- si elle est strictement supérieure à « seuil-rétro » et strictement inférieure à « seuil_montant », deux appréciations sont possibles :
   a. si l'état ciblé était anciennement considéré comme un état « rétro », alors il reste « rétro »,
   b. si l'état chaine cinématique cible était anciennement considéré comme un état « montant », alors l'état reste « montant ».

Cette stratégie est applicable sur toutes les architectures hybrides ou thermiques, notamment sur des transmissions hybrides incluant un moteur thermique et une machine électrique, telles que celle qui est décrite dans la publication WO2012/131259, comportant deux arbres primaires concentriques portant chacun au moins un pignon de descente sur un arbre secondaire relié aux roues du véhicule. Cette transmission comporte deux moyens de couplage. Le premier peut occuper au moins trois positions, dans lesquelles :
- le moteur thermique est découplé de la chaîne cinématique reliant la machine électrique aux roues,
- le moteur thermique entraîne les roues avec ou sans l'appoint de la machine électrique sur un rapport long, et
- le moteur thermique et la machine électrique sont couplés de manière à additionner en direction des roues leurs couples respectifs.

Le deuxième moyen de couplage peut également occuper trois positions, dont une position de point mort et deux positions d'engagement de rapport, court et intermédiaire.

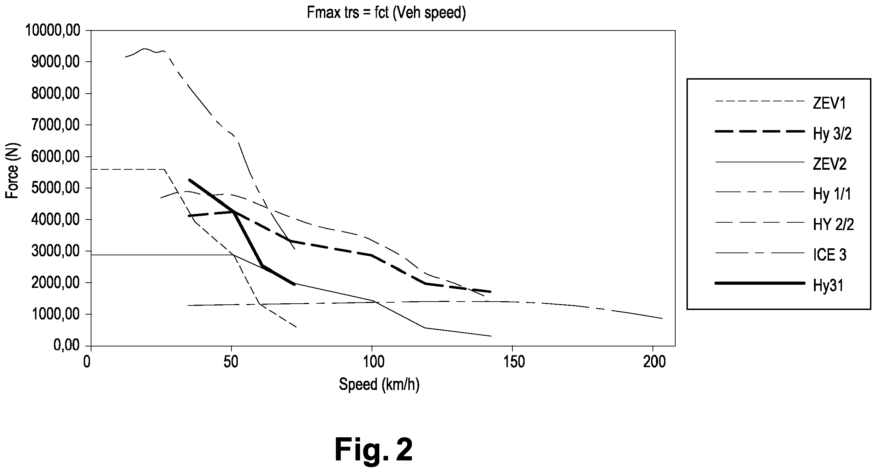

Cette transmission dispose de trois rapports et de sept états de chaîne cinématique, pour chacun desquels on a représenté sur la figure 2, les forces disponibles (force maximale de traction Fmax trs), en fonction de la vitesse du véhicule. Les deux premiers rapports, court et intermédiaire, sont accessibles en mode électrique. Ils définissant les deux états « ZEV1 » et « ZEV2 ». Le troisième rapport, ou rapport long, est accessible en mode thermique. Il définit un état « ICE3 ». Quatre états hybrides sont accessibles, selon les positions des deux moyens de couplage : un premier état hybride « HY1/1 », où les deux arbres primaires sont couplés et où le couple descend sur le rapport court un deuxième état hybride « HY2/2 », où les deux arbres primaires sont couplés et où le couple descend sur le rapport intermédiaire, un troisième état hybride « HY3/1 » où les deux arbres primaires sont découplés, et où le couple du moteur thermique descend sur le rapport long et le couple du moteur électrique descend sur le rapport court, et un quatrième état hybride « HY3/2 », où les deux arbres primaires sont découplés et où le couple du moteur thermique descend sur le rapport long et le couple du moteur électrique descend sur le rapport intermédiaire. Dans chacun de ces états, la force maximale est définie en fonction des démultiplications, des couples maximaux que peuvent fournir la machine électrique et le moteur thermique ainsi que du régime ou de la vitesse véhicule associés. Les états ciblés sont classés montants ou descendants selon que la différence de force motrice disponible est positive ou négative. Le tableau ci-dessous illustre le classement des états cibles de la chaîne cinématique, à partir de l'état courant « HY31 », selon la vitesse du véhicule, en supposant que l'état précédent était « HY32 », et que cet état était antérieurement qualifié de « montant » (HY32 Montant)ou de « descendant » (HY32 descendant).

| V. véh | F.HY31 (N) | F. HY32 (N) | Diff. (N) | HY32 ant. | HY32 cible | Contrain te de force |
|---|---|---|---|---|---|---|
| (a) 30 | 5200 | 4200 | 1000 | Montant | Montant | C1 |
| (b) 50 | 4200 | 4190 | -10 | Montant | Montant | C1 |
| (c) 55 | 4000 | 4200 | -200 | Montant | Rétro | C2 |
| (d) 70 | 2000 | 3500 | -1500 | Rétro | Rétro | C2 |
| (e) 49 | 4210 | 4200 | 10 | Rétro | Rétro | C2 |
| (f) 45 | 4400 | 4200 | 200 | Rétro | Montant | C1 |

Lorsque le véhicule roule à 30 km/h, et que l'état courant HY31 possède une force supérieure de 1000N à celle disponible sur l'état cible HY32, ce dernier, antérieurement montant reste montant (a).

Lorsqu'il roule à 50 km/h, et que l'état courant HY31 possède une force inférieure de 10N à celle disponible sur l'état Hy 32, ce dernier reste cependant de type montant, car la différence n'est pas suffisamment grande pour éviter les phénomènes d'hystérésis (b).

Lorsqu'il roule à 55 km/h, et que l'état courant HY31 possède une force inférieure de 200N à celle disponible sur l'état HY32, ce dernier devient alors de type rétro (c).

Lorsque le véhicule roule à 70 km/h, et que l'état courant HY31 possède une force inférieure de 1500N à celle disponible sur l'état Hy 32, ce dernier reste de type rétro (d).

Lorsque le véhicule roule à 49km/h, et que l'état courant HY31 possède une force supérieure de 10N à celle disponible sur l'état HY32, ce dernier reste cependant de type rétro car la différence n'est pas suffisamment grande pour le changer sans apparition d'hystérésis (e).

Lorsque le véhicule roule à 45 km/h, et que l'état courant HY31 possède une force supérieure de 200N à celle disponible sur l'état HY32, ce dernier devient de type montant (f).

La méthode prévoit que le classement de tous les états ciblés soit mis à jour en temps réel, en fonction de la vitesse de déplacement du véhicule, et en fonction de la différence entre la force motrice disponible sur l'état courant et sur chaque état cible.

Ce classement, ou « typage » de l'état ciblé (HY32 dans l'exemple ci-dessus), permet également de définir en temps réel un niveau minimum, ou « contrainte de force » à satisfaire par cet état cible, pour pouvoir être adopté comme rapport courant. Sur le tableau, on définit deux niveaux de contrainte C1 ou C2, selon que l'état est ciblé « montant » ou « rétro ».

De préférence, la contrainte de rapport montant C1 est supérieure à la contrainte de rapport rétro C2. L'écart entre C1 et C2 a pour but d'imposer une réserve de puissance plus importante pour les passages montants, que pour les passages descendants, de manière à ne pas choisir un état de chaîne cinématique qui risque être abandonné en cas d'une légère augmentation de la consigne de force motrice.

Si la force disponible sur l'état ciblé HY32 est inférieure au niveau de contrainte requis (C1 ou C2 pour HY32), cet état ne peut pas être adopté. Dans les cas (a), (b), (f), la force disponible sur l'état HY32 doit être supérieure à la contrainte de force C1 ; dans les autres cas, (c), (d), (f), il suffit que cette force soit supérieure à la contrainte C2 pour que l'état HY32 soit adoptable.

Le classement des états ciblés, détermine ainsi en temps réel un niveau minimum de force motrice disponible sur chaque état ciblé, pour pouvoir être adopté comme état courant. Le niveau de force minimum pour un rapport ciblé montant, est supérieur au niveau de force minimum pour un rapport ciblé descendant.

Ce tableau montre comment on peut contrôler, dans un cas particulier, les passages d'un état de chaîne cinématique particulier, ici HY31, sur un autre état, HY32. Avec la méthode proposée, ce classement est opéré pour tous les changements possibles entre les états ICE 3, ZEV1, ZEV2, HY1/1, HY2/2, HY3/1, HY3/2. On contrôle ainsi l'ensemble des passages entre ces états. Ce classement est déterminant pour le choix de l'état optimal de la chaîne cinématique.

Dans l'exemple décrit, le GMP dispose de sept états de chaîne cinématique, répartis sur les trois rapports de la transmission : un rapport court et intermédiaire en mode électrique, un rapport court, un rapport intermédiaire et un rapport long en mode hybride, et un rapport long en mode thermique. La méthode permet de contrôler l'ensemble des passages entre les différents états de la chaîne en mode électrique, en mode hybride et en mode thermique.

Cette méthode, décrite dans son application au cas particulier d'une transmission hybride présentant les sept états identifiés, permet en général de contrôler l'état de toute chaîne cinématique de groupe motopropulseur comportant au moins une source d'énergie motrice et un ensemble de coupleurs et de réducteurs dont les engagements respectifs définissent plusieurs états de chaîne accessibles, par l'engagement d'une seule ou de plusieurs sources d'énergie dans la fourniture de couple et par son rapport de transmission aux roues.

De manière générale, la méthode est applicable sur tout GMP muni d'une ou plusieurs sources d'énergie utilisables sur un ou plusieurs rapports de transmission, dont elle permet de contrôler les passages entre plusieurs états entre les modes électrique, hybride et thermique.

La méthode présente de nombreux avantages. Elle permet en premier lieu d'optimiser la consommation et la dépollution du véhicule. L'électrification d'un GMP étant principalement motivée par la réduction de la consommation, la stratégie mise en œuvre, peut avantageusement interagir avec ses lois de gestion d'énergie. Elle permet également d'optimiser l'agrément de conduite du véhicule, en faisant varier son niveau en fonction de l'état de charge de la batterie, et des performances souhaitées.

## Revendications

1. Procédé de contrôle de l'état d'une chaîne cinématique de groupe motopropulseur comportant au moins une source d'énergie motrice et un ensemble de coupleurs et de réducteurs dont les engagements respectifs définissent plusieurs états de chaîne cinématique, par l'engagement d'une seule ou de plusieurs sources d'énergie dans la fourniture de couple et par son rapport de transmission aux roues, **caractérisé en ce que** :
- les états ciblés à partir de l'état courant sont classés en temps réel en fonction de la différence entre la force motrice disponible sur l'état courant et sur chaque état cible,
- et le classement des états ciblés détermine en temps réel un niveau minimum de force motrice disponible sur chaque état ciblé pour pouvoir être adopté comme état courant.

2. Procédé de contrôle selon la revendication 1, **caractérisé en ce que** dans chacun de ces états, la force motrice maximale est définie en fonction des démultiplications, des couples maximaux que peuvent fournir la machine électrique et le moteur thermique, ainsi que du régime ou de la vitesse véhicule.

3. Procédé de contrôle selon la revendication 1 ou 2, **caractérisé en ce que** les états ciblés sont classés montants ou descendants selon que la différence de force motrice par rapport à l'état courant disponible est positive ou négative.

4. Procédé de contrôle selon la revendication 3, **caractérisé en ce que** le classement des états ciblés est mis à jour en temps réel en fonction de la vitesse de déplacement du véhicule.

5. Procédé de contrôle selon la revendication 3 ou 4, **caractérisé en ce que** si la différence de force motrice entre l'état ciblé et l'état courant est supérieure à un premier seuil calibré, l'état ciblé est considéré comme montant par rapport à l'état courant.

6. Procédé de contrôle selon la revendication 3, 4 ou 5, **caractérisé en ce que** si la différence de force motrice entre l'état ciblé et l'état courant est inférieure à un deuxième seuil calibré, l'état ciblé est considéré comme descendant par rapport à l'état courant.

7. Procédé de contrôle selon la revendication 5 ou 6, **caractérisé en ce que** si la différence est strictement supérieure au deuxième seuil et strictement inférieure au premier seuil, un état ciblé était anciennement considéré lassé comme un état « descendant » reste un état descendant, et un état ciblé, anciennement considéré comme un état « montant », reste montant.

8. Procédé de contrôle selon la revendication 1, **caractérisé en ce que** le niveau de force minimum pour un rapport ciblé montant est supérieur au niveau de force minimum pour un rapport ciblé descendant.

9. Procédé de contrôle selon l'une des revendications précédentes d'un groupe motopropulseur comportant deux arbres primaires concentriques portant chacun au moins un pignon de descente sur un arbre secondaire relié aux roues du véhicule, un premier moyen de couplage pouvant occuper trois positions dans lesquelles le moteur thermique est découplé de la chaîne cinématique reliant la machine électrique aux roues, le moteur thermique entraîne les roues avec ou sans l'appoint de la machine électrique sur un rapport long, et le moteur thermique et la machine électrique sont couplés de manière à additionner en direction des roues leurs couples respectifs, et un deuxième moyen de couplage pouvant également occuper trois positions, dont une position de point mort et deux positions d'engagement de rapport, court et intermédiaire, **caractérisé en ce qu'**il permet de contrôler l'ensemble des passages entre les différents états de la chaîne cinématique du groupe motopropulseur en mode électrique, en mode hybride et en mode thermique.

## Patentansprüche

1. Verfahren zur Kontrolle des Zustands eines Antriebsaggregat-Antriebsstrangs, der mindestens eine Antriebsenergiequelle und eine Einheit von Kopplern und Getrieben aufweist, deren jeweilige Eingriffe mehrere Antriebsstrangzustände definieren, durch den Eingriff einer einzigen oder von mehreren Energiequellen beim Liefern eines Drehmoments und durch sein Übersetzungsverhältnis zu den Rädern, **dadurch gekennzeichnet, dass**:
- die ausgehend vom aktuellen Zustand anvisierten Zustände in Echtzeit abhängig von der Differenz zwischen der verfügbaren Antriebskraft im aktuellen Zustand und in jedem anvisierten Zustand eingestuft werden,
- und die Einstufung der anvisierten Zustände in Echtzeit ein Mindestniveau an verfügbarer Antriebskraft in jedem anvisierten Zustand bestimmt, um als aktueller Zustand übernommen zu werden.

2. Kontrollverfahren nach Anspruch 1, **dadurch gekennzeichnet, dass** in jedem dieser Zustände die maximale Antriebskraft abhängig von den Untersetzungen, den maximalen Drehmomenten, die die elektrische Maschine und der Verbrennungsmotor liefern können, sowie von der Drehzahl oder der Fahrzeuggeschwindigkeit definiert wird.

3. Kontrollverfahren nach Anspruch 1 oder 2, **dadurch gekennzeichnet, dass** die anvisierten Zustände aufsteigend oder absteigend eingestuft werden, je nachdem, ob die Antriebskraftdifferenz bezüglich des verfügbaren aktuellen Zustands positiv oder negativ ist.

4. Kontrollverfahren nach Anspruch 3, **dadurch gekennzeichnet, dass** die Einstufung der anvisierten Zustände in Echtzeit abhängig von der Fahrgeschwindigkeit des Fahrzeugs aktualisiert wird.

5. Kontrollverfahren nach Anspruch 3 oder 4, **dadurch gekennzeichnet, dass**, wenn die Antriebskraftdifferenz zwischen dem anvisierten Zustand und dem aktuellen Zustand höher ist als eine erste kalibrierte Schwelle, der anvisierte Zustand bezüglich des aktuellen Zustands als aufsteigend angesehen wird.

6. Kontrollverfahren nach Anspruch 3, 4 oder 5, **dadurch gekennzeichnet, dass**, wenn die Antriebskraftdifferenz zwischen dem anvisierten Zustand und dem aktuellen Zustand niedriger ist als eine zweite kalibrierte Schwelle, der anvisierte Zustand bezüglich des aktuellen Zustands als absteigend angesehen wird.

7. Kontrollverfahren nach Anspruch 5 oder 6, **dadurch gekennzeichnet, dass**, wenn die Differenz strikt höher als die zweite Schwelle und strikt niedriger als die erste Schwelle ist, ein anvisierter Zustand, der früher als ein "absteigender" Zustand eingestuft angesehen wurde, ein absteigender Zustand bleibt, und ein anvisierter Zustand, der früher als ein "aufsteigender" Zustand angesehen wurde, aufsteigend bleibt.

8. Kontrollverfahren nach Anspruch 1, **dadurch gekennzeichnet, dass** das minimale Kraftniveau für einen anvisierten aufsteigenden Gang höher ist als das minimale Kraftniveau für einen anvisierten absteigenden Gang.

9. Kontrollverfahren nach einem der vorhergehenden Ansprüche eines Antriebsaggregats, das zwei konzentrische Antriebswellen aufweist, die je mindestens ein Abwärts-Ritzel auf einer mit den Rädern des Fahrzeugs verbundenen Abtriebswelle tragen, wobei eine erste Kopplungseinrichtung drei Stellungen einnehmen kann, in denen der Verbrennungsmotor vom Antriebsstrang abgekoppelt ist, der die elektrische Maschine mit den Rädern verbindet, der Verbrennungsmotor die Räder mit oder ohne Zusatz der elektrischen Maschine über einen langen Gang antreibt, und der Verbrennungsmotor und die elektrische Maschine so gekoppelt sind, dass sie in Richtung der Räder ihre jeweiligen Drehmomente addieren, und eine zweite Kopplungseinrichtung ebenfalls drei Stellungen einnehmen kann, darunter eine Totpunktstellung und zwei Stellungen des Einlegens eines kurzen Gangs und eines Zwischengangs, **dadurch gekennzeichnet, dass** es ermöglicht, die Gesamtheit der Übergänge zwischen den verschiedenen Zuständen des Antriebsaggregat-Antriebsstrangs im elektrischen Modus, im Hybridmodus und im Verbrennungsmodus zu kontrollieren.

## Claims

1. Control method for controlling the state of a drivetrain of a powertrain comprising at least one motive power source and a set of couplers and reducers of which the respective engagements define a plurality of drivetrain states, by the engagement of just one or of a plurality of energy sources in the provision of torque and by the transmission ratio at which it is transmitted to the wheels, **characterized in that**:
- the states targeted from the current state are ranked in real time on the basis of the difference between the motive force available in the current state and in each target state,
- and the ranking of the targeted states determines, in real time, a minimum level of motive force available in each targeted state so as to be able to be adopted as a current state.

2. Control method according to Claim 1, **characterized in that**, in each of these states, the maximum motive force is defined on the basis of the gear ratios, the maximum torques that can be provided by the electric machine and the combustion engine, and also on the engine speed or speed of the vehicle.

3. Control method according to Claim 1 or 2, **characterized in that** the targeted states are ranked as up/wards or down/wards depending on whether the difference in available motive force compared with the current state is positive or negative.

4. Control method according to Claim 3, **characterized in that** the ranking of the targeted states is updated in real time on the basis of the speed of travel of the vehicle.

5. Control method according to Claim 3 or 4, **characterized in that** if the difference in motive force between the targeted state and the current state is greater than a first calibrated threshold, the targeted state is considered to be up from the current state.

6. Control method according to Claim 3, 4 or 5, **characterized in that** if the difference in motive force between the targeted state and the current state is less than a second calibrated threshold, the targeted state is considered to be down from the current state.

7. Control method according to Claim 5 or 6, **characterized in that** if the difference is strictly greater than the second threshold and strictly lower than the first threshold, a targeted state previously considered pegged as a "down" state remains a down state and a targeted state previously considered as an "up" state remains up.

8. Control method according to Claim 1, **characterized in that** the level of minimum force for an upwards targeted ratio is greater than the level of minimum force for a downwards targeted ratio.

9. Control method according to one of the preceding claims for a powertrain comprising two concentric main shafts each carrying at least one downshifting pinion gear on a secondary shaft connected to the wheels of the vehicle, a first coupling means being able to occupy three positions, in which the combustion engine is decoupled from the drivetrain connecting the electric machine to the wheels, the combustion engine drives the wheels with or without the additional contribution of the electric machine in a long ratio, and the combustion engine and the electric machine are coupled so as to add together their respective torques towards the wheels, and a second coupling means being also able to occupy three positions, namely a neutral position and two ratio-engagement positions: short and intermediate, **characterized in that** it allows control over all changes between the different states of the drivetrain of the powertrain in electric mode, in hybrid mode and in combustion-engine mode.
